# EUROPÄISCHE PATENTSCHRIFT

(11) **EP 1 451 056 B1**
(45) Veröffentlichungstag und Bekanntmachung des Hinweises auf die Patenterteilung: **25.01.2006**
(21) Anmeldenummer: 02777350.6
(22) Anmeldetag: 14.11.2002
(51) Int. Cl.: B62D 6/02

(54) **HYDRAULISCHE HILFSKRAFTLENKUNG FÜR KRAFTFAHRZEUGE**
HYDRAULIC POWER STEERING FOR MOTOR VEHICLES
DIRECTION ASSISTEE HYDRAULIQUE DE VEHICULE AUTOMOBILE

(30) Priorität: 23.11.2001 DE 10157520
(43) Veröffentlichungstag der Anmeldung: 01.09.2004
(73) Patentinhaber: ZF Lenksysteme GmbH, 73527 Schwäbisch Gmünd (DE)
(72) Erfinder: BRENNER, Peter, 73563 Mögglingen (DE)
(86) Internationale Anmeldenummer: PCT/EP2002/012749
(87) Internationale Veröffentlichungsnummer: WO 2003/043871

(56) Entgegenhaltungen:
- EP-A- 1 024 072
- DE-A- 3 934 885
- US-A- 4 669 568
- US-A- 5 346 175

## Beschreibung

Die Erfindung betrifft ein Lenksystem für Kraftfahrzeuge mit einer hydraulischen Hilfskraftlenkung gemäß dem Oberbegriff der Ansprüche 1 und 5.

Ein Hilfskraftlenksystem der vorgenannten Art ist beispielsweise aus der DE 42 20 624 A1 bekannt, bei der über ein hydraulisches Lenkventil in Form eines Drehschieberventiles die drehmomentenabhängige Beaufschlagung des die Lenkkraft unterstützenden Servostellers gesteuert wird. Hierzu ist der Drehschieber des Drehschieberventiles zu einem durch die Lenkspindel gebildeten Eingangsglied drehfest und es ist das Eingangsglied gegenüber einem mit dem Lenkgetriebe verbundenen Ausgangsglied drehmomentenabhängig verdrehbar über eine Drehstabfeder verbunden, wobei das Ausgangsglied seinerseits zu einer zum Drehschieber koaxialen Steuerbuchse drehfest ist. In Abhängigkeit von der drehmomentenabhängigen Verdrehung der Steuerbuchse gegenüber dem Drehschieber des Lenkventiles ergeben sich unterschiedliche Überdeckungsgrade, und damit Öffnungsquerschnitte im Zu- und Ablauf zum Servosteller.

Ergänzend zur Drehmomentenabstützung über die Drehstabfeder ist die Steuerbuchse stirnseitig axial über einen Rückwirkungskolben beaufschlagt, der zum Eingangsglied bzw. zum Drehschieber axial verschieblich drehfest abgestützt ist und der in Richtung auf die Steuerbuchse federbelastet ist. Die einander zugewandten Stirnseiten der Steuerbuchse und des Rückwirkungskolbens weisen entgegengesetzt geneigte Abdrängflächen auf, zwischen denen Wälzkörper liegen, so dass sich entsprechend der drehmomentenabhängigen Verdrehung der Steuerbuchse gegenüber dem Drehschieber bzw. dem Eingangsglied durch das Auflaufen der Wälzkörper auf die Abdrängflächen eine Verlagerung des Rückwirkungskolbens entgegen der diesen in Richtung auf die Steuerbuchse beaufschlagenden Feder ergibt.

Der die Feder aufnehmende Raum ist als Druckraum ausgebildet und an die Hochdruckseite des Hydraulikkreislaufes anzuschließen, derart, dass der Rückwirkungskolben, unterstützend zur beaufschlagenden Federkraft, in Richtung auf die Steuerbuchse beaufschlagt ist, womit eine drehsteifere Abstützung zwischen Ein- und Ausgangsglied erreicht wird, mit entsprechend geringerer Servowirkung. Die Druckversorgung der Rückwirkungskammer wird über einen elektro-hydraulischen Wandler mit einem eine hydraulische Ventilanordnung beaufschlagenden Magnetsteller geschwindigkeitsabhängig gesteuert.

Der vorstehend geschilderte Aufbau veranschaulicht eine längere Funktionskette, in der ungeachtet der Prüfung und Einstellung der einzelnen Funktionselemente Toleranzen auftreten können, die insbesondere im Rahmen der bei der Serienfertigung auftretenden Streuung im Lenkverhalten spürbar werden und damit bei Fahrzeugen gleicher Ausrüstung zu einem unterschiedlichen Lenkgefühl führen können. Solche Serienstreuungen führen bei Herstellern von Fahrzeugen zu Beanstandungen, und ebenso bei Endkunden, wenn Abweichungen vom Gewohnten empfunden werden.

Da die Überprüfung der Lenkung in ihrer Gesamtheit und im Gesamtzusammenbau im Fahrzeug bei vertretbarem Aufwand kaum möglich ist, insbesondere aber auch ein Zugriff auf die hydraulischen Elemente ohne Demontage nicht realisierbar ist, muß in der Prüfung der Einzelelemente auf spezielle Einstellvorrichtungen zurückgegriffen werden. Mit deren Hilfe wird der elektro-hydraulische Wandler durch definiertes mechanisches Verstellen seines hydraulischen Wandlerventiles auf eine Wandlerkennlinie eingestellt, die, bezogen auf den wirksamen Spulenstrom, geschwindigkeitsabhängig einen Rückwirkungsdruck, also einen Druckaufbau in der Rückwirkungskammer, zur Folge hat, der der jeweils angestrebten Servowirkung entspricht.

Eine derartige Kalibrierung des elektro-hydraulischen Wandlers ist als solche von den Toleranzen der zugehörigen Einstellvorrichtung beeinflusst, und in der Paarung zum nachgeordneten hydraulischen Ventil, insbesondere einem Drehschieberventil, von dessen Toleranzen und denen eines nachgeordneten Lenkgetriebes überlagert, wobei nachträgliche Eingriffsmöglichkeiten im Sinne eines Nachjustierens, d.h. einer mechanischen Verstellung der hydraulischen Ventilanordnung praktisch nicht bestehen, somit nachträgliche Änderungen allenfalls mit erheblichem Aufwand möglich sind.

Aus der US 5 346 175 A ist eine hydraulische Hilfskraftlenkung bekannt, die ein Lenkventil 13 (Fig. 1 und 3) enthält, welches einen Servosteller 14 steuert. Außerdem ist ein hydraulisches Wandlerventil 19 vorgesehen, mittels dessen dieser Ansteuerung eine geschwindigkeitsabhängige Ansteuerung überlagert ist. Die Steuerung des Wandlerventils 19 erfolgt über einen Magnetsteller mit Spule 26/36. Zur optimalen Einstellung des Wandlerventiles 19 ist eine Feder 65 (Spalte 5, Zeilen 57 ff.) vorgesehen. Außerdem wird zur Kalibrierung des Ventiles der Luftspalt der Spule 59 (Spalte 6, Zeilen 10 ff.) veränderbar gestaltet. Es sind also mechanische Mittel (Feder) und konstruktive Maßnahmen (Luftspalt) vorgesehen, mit denen das Ventil auf eine optimale Arbeitsweise hin eingestellt wird. Somit ist dort nur mit relativ großem Aufwand ein Nachjustieren der hydraulischen Ventilanordnung möglich.

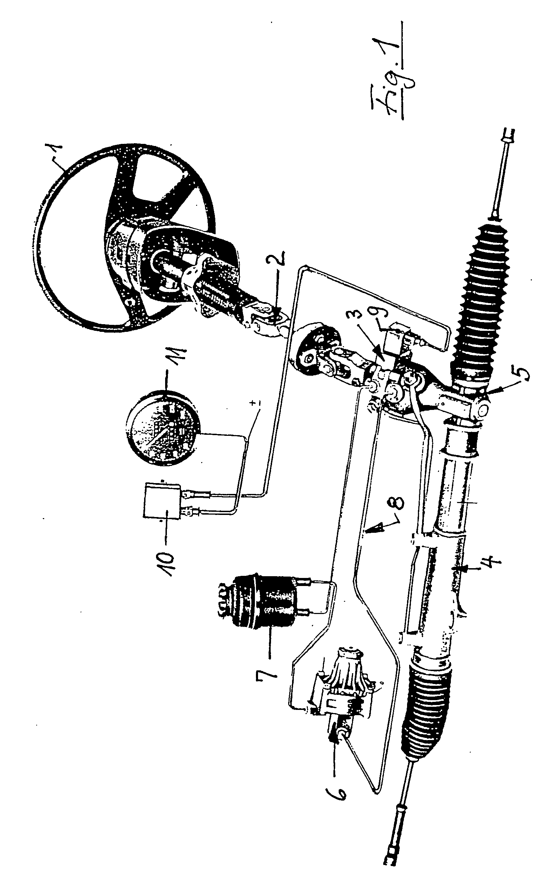

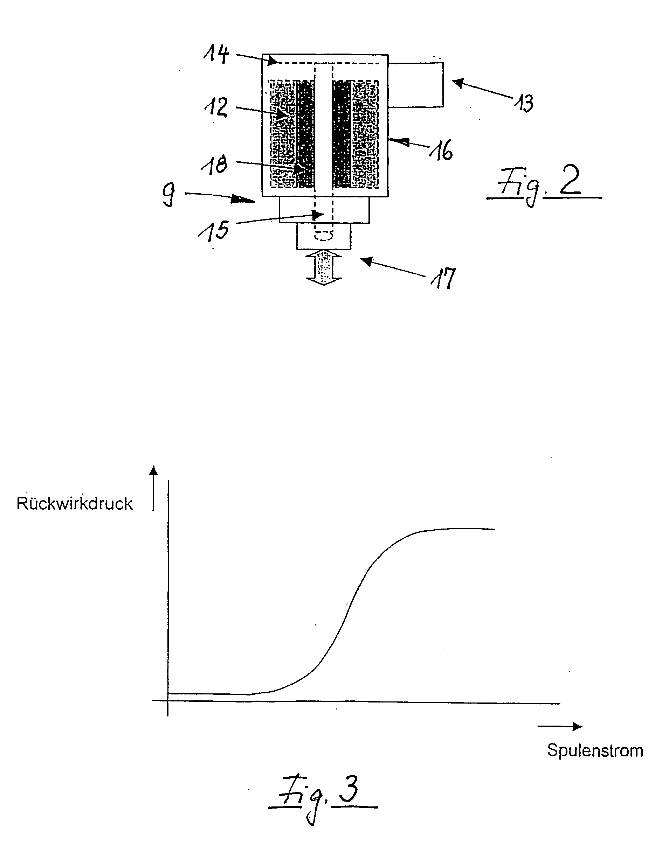

Aus der gattungsbildenden US 4 669 568 A ist eine hydraulische Hilfskraftlenkung für Kraftfahrzeuge bekannt, die auf ein Soll-Lenkverhalten ausgelegt ist und ein hydraulisches Lenkventil 1 (Fig. 1) aufweist, über das drehmomentenabhängig die hydraulische Beaufschlagung eines lenkkraftunterstützenden Servostellers 5 gesteuert ist. In Überlagerung zur lenkkraftabhängigen Ansteuerung ist eine geschwindigkeitsabhängige, hydraulische Ansteuerung vorgesehen. Dazu wird ein elektro-hydraulischer Wandler 20 eingesetzt, der zwei Spulen 42, 45, (Fig. 2) aufweist. Mit der ersten Spule 42 wird die geschwindigkeitsabhängige Ventilsteuerung durchgeführt, welche langsamen Variationen von nur wenigen Hertz ausgesetzt ist. Die zweite Spule 45, die kleiner als die erste ist, dient zur lenkkraftabhängigen Ansteuerung, welche mittels eines Lenkmomentensensors 11 erfolgt und welche schnelleren Variationen von etwa 150 Hz ausgesetzt ist. Somit wird eine aus zwei überlagernden Anteilen bestehende Steuerung geschaffen, die für jeden Anteil - Fahrgeschwindigkeit und Lenkmoment - mit besonders hoher Genauigkeit arbeitet. In dieser Steuerung erfolgt des Weiteren der Abgleich des Wandlerventils durch eine sitzgenaue Einstellung eines Ventilteils 38 auf das entsprechende Ventilloch 35. Demnach wird ein rein mechanischer Abgleich vorgenommen, der, wie schon bei den anderen zuvor genannten Lösungen angesprochen, nachteilig ist.

Der Erfindung liegt die Aufgabe zugrunde, einen Weg aufzuzeigen, korrigierend in bestehende Systeme ohne Demontage zumindest in engen Grenzen eingreifen zu können.

Erreicht wird dies erfindungsgemäß mit Lösungen gemäß den Ansprüchen 1 und 5. Diese ermöglichen es, die Wandlerkennlinie korrigierend durch Adaption des Magnetstellers des elektro-hydraulischen Wandlers anzupassen, also auf rein elektrischem Wege, wobei diese Vorgehensweise die Möglichkeit eröffnet, entsprechende Korrekturen auf einfache Weise und ohne Rückgriff auf spezielle Einrichtungen durch eine entsprechende Vorrüstung des Magnetstellers vorzunehmen.

Diese Vorrüstung des Magnetstellers wird im Hinblick auf Veränderung des wirksamen Spulenstromes mit geringem Aufwand dadurch vorgenommen, dass der wirksame Spulenstrom gemäß Anspruch 1 durch Veränderung der Zahl der wirksamen Windungen und/oder gemäß Anspruch 5 durch Parallelschalten zumindest eines Widerstandes zur Spule beeinflusst wird. Die Erfindung geht somit davon aus, dass die jeweilige Anpassung durch Abtrennen einer Anzahl von Windungen und/oder dadurch vorgenommen wird, dass einer oder mehrere der parallel geschalteten, fest installierten Widerstände abgetrennt oder in anderer Weise unwirksam gemacht werden.

Der Zugriff auf entsprechende Trennstellen, sei es zum Unwirksammachen von Abgleichwicklungen oder von Widerständen, erfolgt in von außen gut erreichbaren, bevorzugt außen liegenden Bereichen des Magnetstellers, einschließlich zugehöriger Steckanschlüsse, über verschließbare Öffnungen, die nach erfolgter Kalibrierung lösbar oder dauerhaft, gegebenenfalls durch Versiegeln, zu verschließen sind.

Bezüglich der Adaption des Magnetstellers durch Veränderung der Zahl der wirksamen Windungen seiner Spule sind einer Hauptwicklung in Reihenschaltung eine oder mehrere Abgleichwicklungen zugeordnet, die den Abgleich durch Überbrücken bzw. Kurzschließen ermöglichen. Bei der entsprechenden Anpassung durch Parallelschaltung von Widerständen sind ein Widerstand oder mehrere Widerstände in Parallelschaltung und jeweils gesondert abtrennbar vorgesehen. Diese Möglichkeiten zur Adaption können auch in Kombination vorgesehen werden.

Anstelle einzelner Widerstände kann im Rahmen der Erfindung auch ein Widerstandsnetzwerk eingesetzt werden, das bezüglich des wirksamen Gesamtwiderstandes entsprechend zu verändern ist, beispielsweise durch Zerstörung mittels Überstrom (Durchbrennen) Insgesamt werden somit durch die Erfindung mehrere, einzeln oder in Kombination einsetzbare Möglichkeiten aufgezeigt, die Charakteristik eines Lenksystems mit einfachen Mitteln im Nachhinein im Hinblick auf ein Sollverhalten zu korrigieren, derart, dass toleranzbedingte Streuungen auf ein Minimum reduziert werden, und gegebenenfalls auch spezielle Beanstandungen von Endkunden noch behoben werden können, und dies auch in gegenläufigem Sinne, falls Kunden gerade das Sollverhalten nicht wünschen.

Weitere Einzelheiten und Merkmale der Erfindung ergeben sich aus den Ansprüchen. Ferner wird die Erfindung nachstehend anhand von Ausführungsbeispielen näher erläutert, wobei
- Fig. 1: in einer schematisierten Gesamtübersicht eine hydraulische Hilfskraftlenkung für Kraftfahrzeuge mit dem hydraulischen, drehmomentenabhängig arbeitenden Ventil zugeordnetem elektro-hydraulischen Wandler zur geschwindigkeitsabhängigen, hydraulischen Ansteuerung zeigt,
- Fig. 2: eine Prinzipdarstellung eines elektro-hydraulischen Wandlers in stark vereinfachter Form,
- Fig. 3: in einem Diagramm, in dem der geschwindigkeitsabhängige Rückwirkdruck über dem Spulenstrom aufgetragen ist, die dem Solllenkverhalten entsprechende Bestromungskennlinie,
- Fig. 4: eine erste Lösungsvariante zur adaptiven Beeinflussung des wirksamen Spulenstroms des elektro-hydraulischen Wandlers durch die Zuordnung in Reihe liegender, abtrennbarer Abgleichwicklungen zu einer Hauptwicklung der Spule, sowie
- Fig. 5 und 6: die Möglichkeit veranschaulichen, den wirksamen Spulenstrom durch Parallelschaltung von Widerständen zu beeinflussen.

In der schematisierten Gesamtdarstellung der wesentlichen Teile einer Hilfskraftlenkung für Fahrzeuge - das Fahrzeug und dessen von der Lenkung beaufschlagte lenkbare Räder sind nicht dargestellt - ist mit 1 ein Lenkrad bezeichnet, über das zur Übermittlung der Lenkbefehle unter Vermittlung einer gelenkigen Lenkspindel 2 ein hydraulisches Lenkventil 3 angesprochen wird, das., beispielsweise in der Ausgestaltung als Drehschieberventil, drehmomentenabhängig einen Servosteller 4 ansteuert, der die auf das Lenkrad 1 ausgeübten und auf das Lenkgetriebe 5 übertragenen Lenkkräfte in Abhängigkeit von vorgegebenen Parametern, insbesondere drehmomenten- und geschwindigkeitsabhängig unterstützt. Das nicht weiter dargestellte Lenkgetriebe 5 ist im Ausführungsbeispiel als Zahnstangenlenkung angedeutet, bei der der Servosteller 4 etwa in Richtung der quer zum Fahrzeug zwischen den nicht dargestellten lenkbaren Rädern sich erstreckenden Zahnstange liegt und bei der die Zahnstange mit einem Ritzel kämmt, das mit dem Ausgangsglied des hydraulischen, drehmomentenabhängig arbeitenden Lenkventiles 3 verbunden ist. Die notwendige hydraulische Druckversorgung erfolgt über eine Druckölpumpe 6, die mit dem Ölbehälter 7 in einem hydraulischen Versorgungskreis 8 liegt, der über das Lenkventil 3 zum Servosteller 4 führt. Dem Lenkventil 3 ist ein elektro-hydraulischer Wandler 9 zugeordnet, über den eine geschwindigkeitsabhängige Beaufschlagung des Lenkventiles 3 überlagert zu dessen drehmomentenabhängiger Beaufschlagung erfolgt. Der elektro-hydraulische Wandler 9 umfasst eine hydraulische Ventilanordnung 17 und einen diese beaufschlagenden Magnetsteller 16 (Fig. 2), der über ein Steuergerät 10 gesteuert wird, in dem die über den insbesondere elektronischen Tachometer 11 erfasste Fahrzeuggeschwindigkeit in entsprechende Stellsignale für den Magnetsteller 16 des elektro-hydraulischen Wandlers 9 angesetzt werden. Die diesbezüglichen Funktionen sind beispielsweise der DE 42 20 624 A1 ebenso zu entnehmen wie ein vorteilhafter Aufbau des Ventiles 3 in einer Ausgestaltung als Drehschieberventil, bei der der drehmomentenabhängigen Druckversorgung des Servostellers 4 eine geschwindigkeitsabhängige Ansteuerung überlagert ist, derart, dass die Servowirkung prinzipiell mit zunehmender Geschwindigkeit abnimmt.

Dieser Effekt wird dadurch erreicht, dass das Lenkventil 3 im Bereich einer sogenannten Rückwirkungskammer über der Geschwindigkeit ansteigend druckbeaufschlagt wird, wobei dieser Druck über einen die Rückwirkungskammer teilweise begrenzenden Rückwirkungskolben in Stellkräfte umgesetzt wird, die sich im Sinne einer Verhärtung des drehmomentenabhängig arbeitenden Übertragungsgliedes, meist einer Drehstabfeder, des üblicherweise als Drehschieberventil ausgebildeten Lenkventiles 3 auswirken.

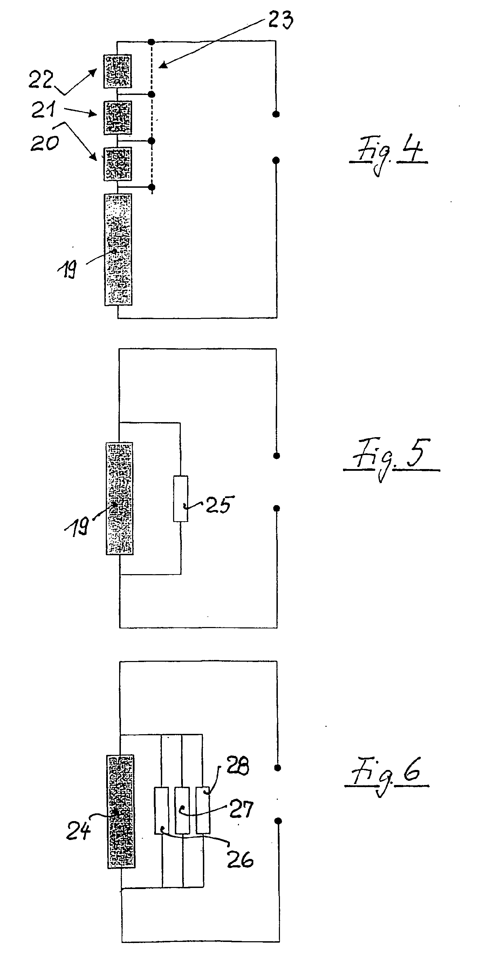

Im Diagramm gemäß Fig. 3 ist über die Bestromungskennlinie der Rückwirkdruck in Abhängigkeit vom wirksamen Spulenstrom veranschaulicht, der, in seiner Größe geschwindigkeitsabhängig über das Steuergerät 10 festgelegt, über die einen Eisenkern 18 umschließende Spule 12 des elektro-hydraulischen Wandlers 9 fließt. Der elektro-hydraulische Wandler 9 ist stark schematisiert in Fig. 2 veranschaulicht, wobei bei 13 der elektrische Versorgungsanschluss angedeutet ist und bei 14 die Feder, über die der Anker 15, bzw. ein mit diesem verbundenes Ventilglied, beispielsweise eine Ventilnadel beaufschlagt ist, die den freien Durchflussquerschnitt der vom Magnetsteller 16 beaufschlagten hydraulischen Ventilanordnung - bei 17 schematisch angedeutet - des elektro-hydraulischen Wandlers 9 zur Rückwirkungskammer und damit den Rückwirkdruck, bestimmt.

Die Abhängigkeit des Rückwirkdruckes vom wirksamen Spulenstrom wird im Rahmen der Erfindung dazu genutzt, durch Beeinflussung des Spulenstromes über den elektro-hydraulischen Wandler die Lenkung auf ein Soll-Lenkverhalten abzugleichen, von dem sich Abweichungen insbesondere durch Toleranzen des Lenkventiles ergeben können.

Um diesen Abgleich mit einfachen Mitteln und nachträglich auch innerhalb des Fahrzeuges vornehmen zu können zeigen Figuren 4 bis 6 verschiedene Möglichkeiten, den wirksamen Spulenstrom des Magnetstellers zu beeinflussen, und zwar entweder durch Reduzierung der Windungszahl der Spule oder durch Parallelschalten von Widerständen zur Spule.

In Fig. 4 ist hierzu die Spule bezüglich ihrer Wicklung auf eine Hauptwicklung 19 und hierzu in Reihe geschaltete Abgleichwicklungen 20 bis 22 aufgeteilt, wobei die Abgleichwicklungen 20 bis 22 durch Kurzschließen bzw. Überbrücken unwirksam gemacht werden können, wie durch die strichliert angedeutete Kurzschlussleitung 23 veranschaulicht. Fig. 4 zeigt insoweit eine Möglichkeit, durch Kurzschließen von einer oder mehrerer der Abgleichwicklungen 20 bis 22 die jeweilige Adaption vorzunehmen, so dass bezogen auf das Beispiel gemäß Fig. 4. vier Stufen des Abgleichs gegeben sind.

Fig. 5 zeigt zur Wicklung 24 in Parallelschaltung einen Widerstand 25, Fig. 6 zur Wicklung 24 in Parallelschaltung Widerstände 26 bis 28. Auch durch die Parallelschaltung von Widerständen 25 bis 28 lässt sich die entsprechende Adaption vornehmen, wobei die Parallelschaltung mehrerer Widerstände 26 bis 28 gemäß Fig. 6 zudem auch die Möglichkeit bietet, Widerstände unterschiedlicher Größe einzusetzen, um durch entsprechende Kombination der unwirksam zu machenden, beispielsweise durch Durchbrennen unwirksam zu machenden Widerstände unterschiedliche Adaptionsstufen zu erreichen. In entsprechender Weise können auch die Abgleichwicklungen gemäß Fig. 4 unterschiedliche Windungszahlen aufweisen und kombiniert werden.

Nicht dargestellt ist in den Zeichnungen der zum Kurzschließen bzw. Überbrücken der Windungen bzw. zum Abtrennen der Widerstände erforderliche Zugriff auf den Magnetsteller, dem in der Ummantelung hierfür beispielsweise Zugriffsöffnungen zugeordnet sein können. Diese sind bevorzugt über einen Deckel zu verschließen und können gegebenenfalls auch zu einer Zugriffsöffnung zusammengefasst sein. Dadurch sind erforderliche adaptive Eingriffe von außen leicht möglich. Eine weitere bevorzugte Lösung besteht darin, die entsprechenden Eingriffsöffnungen bzw. Zugriffsstellen im Bereich der elektrischen Versorgung 13 des Magnetstellers 14 vorzusehen, gegebenenfalls auch in die Steckverbindung als solche zu integrieren, wobei über das jeweilige Steckelement zugleich auch die erforderliche Abdichtung der Zugriffsöffnung vorgenommen werden kann und dem Steckelement gegebenenfalls auch Steckzungen zugeordnet sein können, die durch entsprechende Kontaktierung die erforderlichen Verbindungen herstellen oder auch unterbrechen. Die Steckzungen können beispielsweise - jeweils an das angestrebte Ergebnis angepasst - mit Sollbruchstellen versehen sein, um die notwendige Adaption - gegebenenfalls sogar werkzeuglos vornehmen zu können.

## Patentansprüche

1. Lenksystem für Kraftfahrzeuge mit einer hydraulischen Hilfskraftlenkung, die auf ein Soll-Lenkverhalten ausgelegt ist und ein hydraulisches Lenkventil (3) aufweist, über das drehmomentenabhängig die hydraulische Beaufschlagung eines lenkkraftunterstützenden Servostellers (4) gesteuert ist, und bei der in Überlagerung zur lenkkraftabhängigen Ansteuerung des Servostellers (4) eine geschwindigkeitsabhängige hydraulische Ansteuerung desselben vorgesehen ist, die mit einem elektro-hydraulischen Wandler (9) arbeitet, der ein hydraulisches Wandlerventil aufweist, das durch einen eine Spule (12) umfassenden Magnetsteller (16) gesteuert ist,
**dadurch gekennzeichnet,**
**dass**, bezogen auf ein mit dem Lenksystem ausgerüstetes Fahrzeug, über den Magnetsteller (16) des elektro-hydraulischen Wandlers (9) toleranzbedingte Abweichungen des Lenksystems vom Soll-Lenkverhalten **dadurch** mit rein elektrisch wirkenden Mitteln abgeglichen werden, dass die Spule (12) des Magnetstellers (16) eine Hauptwicklung (19) und zumindest eine zu dieser in Reihe liegende, überbrückbare Abgleichwicklung (20 bis 22) aufweist und dass die zumindest eine Abgleichwicklung (20 bis 22) zur Veränderung des wirksamen Spulenstromes in Anpassung an das jeweils geforderte Lenkverhalten durch Zugriff auf den Magnetsteller (16) bleibend unwirksam gemacht werden kann, wobei die zumindest eine Abgleichwicklung (20 bis 22) baulich separiert und ohne Zugriff auf den Aufbau des Magnetstellers (16) von außen **dadurch** inaktiviert wird, dass eine Trennstelle in einer verschließbaren Öffnung des Spulengehäuses und/oder des Gehäuses des Magnetstellers (16) vorgesehen und über einen Deckel zu verschließen ist.

2. Lenksystem nach Anspruch 1,
**dadurch gekennzeichnet,**
**dass** die Spule (12) mehrere Abgleichwicklungen (20 bis 22) aufweist.

3. Lenksystem nach Anspruch 1 oder 2,
**dadurch gekennzeichnet,**
**dass** die Trennstelle im Überdeckungsbereich eines dem Magnetsteller (16) zugeordneten Steckeranschlusses liegt.

4. Lenksystem nach einem der Ansprüche 1 bis 3,
**dadurch gekennzeichnet,**
**dass** die Trennstelle der Steckverbindung einem Steckeranschluss zugeordnet ist.

5. Lenksystem für Kraftfahrzeuge mit einer hydraulischen Hilfskraftlenkung, die auf ein Soll-Lenkverhalten ausgelegt ist und ein hydraulisches Lenkventil (3) aufweist, über das drehmomentenabhängig die hydraulische Beaufschlagung eines lenkkraftunterstützenden Servostellers (4) gesteuert ist, und bei der in Überlagerung zur lenkkraftabhängigen Ansteuerung des Servostellers (4) eine geschwindigkeitsabhängige hydraulische Ansteuerung desselben vorgesehen ist, die mit einem elektro-hydraulischen Wandler (9) arbeitet, der ein hydraulisches Wandlerventil aufweist, das durch einen eine Spule (12) umfassenden Magnetsteller (16) gesteuert ist,
**dadurch gekennzeichnet,**
**dass**, bezogen auf ein mit dem Lenksystem ausgerüstetes Fahrzeug, über den Magnetsteller (16) des elektro-hydraulischen Wandlers (9) toleranzbedingte Abweichungen des Lenksystems vom Soll-Lenkverhalten **dadurch** mit rein elektrisch wirkenden Mitteln abgeglichen werden, dass zur Wicklung (19; 24) der Spule (12) des Magnetstellers (16) zumindest ein in Parallelschaltung liegender Widerstand (25 bis 28) vorgesehen ist und dass der zumindest eine Widerstand (25 bis 28) zur Veränderung des wirksamen Spulenstromes in Anpassung an das jeweils geforderte Lenkverhalten durch Zugriff auf den Magnetsteller (16) über eine von außen zugängliche Zugriffsöffnung bleibend unwirksam gemacht werden kann.

6. Lenksystem nach Anspruch 5,
**dadurch gekennzeichnet,**
**dass** mehrere in Parallelschaltung zur Spule (12) liegende Widerstände (26 bis 28) vorgesehen sind.

7. Lenksystem nach Anspruch 5 oder 6,
**dadurch gekennzeichnet,**
**dass** der jeweilige, zumindest eine Widerstand (25 bis 28) baulich und ohne weiteren Eingriff in den Aufbau des Magnetstellers (16) von außen zu inaktivieren, insbesondere abzutrennen ist.

8. Lenksystem nach einem der Ansprüche 5 bis 7,
**dadurch gekennzeichnet,**
**dass** der jeweilige, zumindest eine inaktivierbare Widerstand (25 bis 28) durch Anlegen eines Überstromes zu zerstören ist.

9. Lenksystem nach einem der Ansprüche 5 bis 8,
**dadurch gekennzeichnet,**
**dass** als Widerstand ein Widerstandnetzwerk vorgesehen ist.

10. Lenksystem nach Anspruch 5,
**dadurch gekennzeichnet,**
**dass** die Zugriffsöffnung zu verschließen, insbesondere über einen Deckel zu verschließen ist.

## Claims

1. Steering system for motor vehicles, having a hydraulic power steering system which is designed for a desired steering behaviour and has a hydraulic steering valve (3), via which, as a function of the torque, the application of hydraulic force to a servo actuator (4) which assists the steering force is controlled, and in which hydraulic power steering system a speed-dependent hydraulic actuation of the servo actuator (4) is provided in a manner which is superimposed on the steering-force-dependent actuation of the said servo actuator (4), the said speed-dependent hydraulic actuation operating with an electrohydraulic converter (9) which has a hydraulic converter valve which is controlled by a magnet actuator (16) which comprises a coil (12), **characterized in that**, in relation to a motor vehicle which is equipped with the steering system, tolerance-induced deviations of the steering system from the desired steering behaviour are equalized as a result, via the magnet actuator (16) of the electrohydraulic converter (9), with the aid of means which act purely electrically, **in that** the coil (12) of the magnet actuator (16) has a main winding (19) and at least one equalizing winding (20 to 22) which can be bypassed and lies in series with the said main winding (19), and **in that** the at least one equalizing winding (20 to 22) can be rendered permanently ineffective in order to change the effective coil current, in adaptation to the respectively required steering behaviour, by access to the magnet actuator (16), the at least one equalizing winding (20 to 22) being deactivated in a structurally separate manner and without access to the magnet actuator (16) from the outside, by a disconnect being provided in a closable opening of the coil housing and/or the housing of the magnet actuator (16) and intended to be closed by a cover.

2. Steering system according to Claim 1, **characterized in that** the coil (12) has a plurality of equalizing windings (20 to 22).

3. Steering system according to Claim 1 or 2, **characterized in that** the disconnect lies in the region of overlap of a plug connection which is assigned to the magnet actuator (16).

4. Steering system according to one of Claims 1 to 3, **characterized in that** the disconnect of the plug-in connection is assigned to a plug connection.

5. Steering system for motor vehicles, having a hydraulic power steering system which is designed for a desired steering behaviour and has a hydraulic steering valve (3), via which, as a function of the torque, the application of hydraulic force to a servo actuator (4) which assists the steering force is controlled, and in which hydraulic power steering system a speed-dependent hydraulic actuation of the servo actuator (4) is provided in a manner which is superimposed on the steering-force-dependent actuation of the said servo actuator (4), the said speed-dependent hydraulic actuation operating with an electrohydraulic converter (9) which has a hydraulic converter valve which is controlled by a magnet actuator (16) which comprises a coil (12), **characterized in that**, in relation to a motor vehicle which is equipped with the steering system, tolerance-induced deviations of the steering system from the desired steering behaviour are equalized as a result, via the magnet actuator (16) of the electrohydraulic converter (9), with the aid of means which act purely electrically, **in that** at least one resistor (25 to 28) which is connected in parallel is provided for the winding (19; 24) of the coil (12) of the magnet actuator (16), and **in that** the at least one resistor (25 to 28) can be rendered permanently ineffective in order to change the effective coil current, in adaptation to the respectively required steering behaviour, by access to the magnet actuator (16) via an access opening which is accessible from outside.

6. Steering system according to Claim 5, **characterized in that** a plurality of resistors (26 to 28) are provided which are connected in parallel to the coil (12).

7. Steering system according to Claim 5 or 6, **characterized in that** the respective, at least one resistor (25 to 28) is to be deactivated, in particular disconnected, from the outside structurally and without further access to the construction of the magnet actuator (16).

8. Steering system according to one of Claims 5 to 7, **characterized in that** the respective, at least one resistor (25 to 28) which cannot be deactivated is to be destroyed by the application of an overload current.

9. Steering system according to one of Claims 5 to 8, **characterized in that** a resistor network is provided as the resistor.

10. Steering system according to Claim 5, **characterized in that** the access opening is to be closed, in particular is to be closed via a cover.

## Revendications

1. Système de direction pour véhicules automobiles avec une direction assistée hydraulique conçue pour un comportement de direction de consigne et présentant une soupape de direction hydraulique (3) par laquelle, en fonction du couple, est commandée la mise sous pression hydraulique d'un servovérin (4) supportant la force de direction et dans laquelle, en superposition à la commande du servovérin (4) dépendant de la force de direction, une commande hydraulique en fonction de la vitesse de ce dernier est prévue, fonctionnant avec un convertisseur électro-hydraulique (9) présentant une soupape de conversion hydraulique commandée par un vérin magnétique (16) comprenant une bobine (12),
**caractérisé en ce**
**que**, relatif à un véhicule équipé du système de direction, des écarts du comportement de direction de consigne dus à la tolérance du système de direction sont ajustés par le vérin magnétique (16) du convertisseur électro-hydraulique (9) par des moyens agissant par action exclusivement électrique, que la bobine (12) du vérin magnétique (16) présente un bobinage principal (19) et au moins un bobinage d'ajustement pontable (20 à 22) couplé en série à celui-ci et que l'au moins un bobinage d'ajustement (20 à 22) peut être rendu inefficace durablement pour la modification du courant actif de bobine par adaptation au comportement de direction correspondant requis en accédant au vérin magnétique (16), le au moins un bobinage d'ajustement (20 à 22) étant séparable par sa construction et désactivable sans accès à la structure du vérin magnétique (16) depuis l'extérieur, de sorte qu'un point de séparation soit prévu dans une ouverture obturable du boîtier de bobine et/ou du boîtier du vérin magnétique (16) et fermable par un couvercle.

2. Système de direction selon la revendication 1,
**caractérisé en ce**
**que** la bobine (12) présente plusieurs bobinages d'ajustement (20 à 22).

3. Système de direction selon une des revendications 1 ou 2,
**caractérisé en ce**
**que** le point de séparation se situe dans la zone de recouvrement d'un raccordement de connecteur attribué au vérin magnétique (16).

4. Système de direction selon une des revendications 1 à 3,
**caractérisé en ce**
**que** le point de séparation de la connexion par enfichage est attribué à un raccordement de connecteur.

5. Système de direction pour véhicules automobiles avec une direction assistée hydraulique conçue pour un comportement de direction de consigne et présentant une soupape de direction hydraulique (3) par laquelle, en fonction du couple est commandée la mise sous pression hydraulique d'un servovérin (4) supportant la force de direction et dans laquelle, en superposition à la commande du servovérin (4), en fonction de la force de direction, une commande hydraulique en fonction de la vitesse de ce dernier est prévue, qui fonctionne avec un convertisseur électro-hydraulique (9) présentant une soupape de conversion hydraulique commandée par un vérin magnétique (16) comprenant une bobine (12),
**caractérisé en ce**
**que** relatif à un véhicule équipé du système de direction, les écarts du comportement de direction de consigne dus à la tolérance du système de direction sont ajustés par le vérin magnétique (16) du convertisseur électro-hydraulique (9) par des moyens agissant par action exclusivement électrique, qu'au moins une résistance (25 à 28) est prévue en parallèle au bobinage (19 ; 24) de la bobine (12) du vérin magnétique (16) et que la au moins une résistance (25 à 28) peut être durablement rendue inefficace depuis une ouverture d'accès accessible depuis l'extérieur afin de modifier le courant efficace de bobine en fonction de chaque comportement de direction exigé.

6. Système de direction selon recommandation 5,
**caractérisé en ce**
**que** plusieurs résistances (26 à 28) couplées en parallèle à la bobine (12) sont prévues.

7. Système de direction selon l'une des revendications 5 ou 6,
**caractérisé en ce**
**que** chacune des au moins une résistances (25 à 28) peut être désactivée depuis l'extérieur, en particulier séparée grâce à sa structure et sans autre intervention dans la structure du vérin magnétique (16).

8. Système de direction selon l'une des revendications 5 à 7,
**caractérisé en ce**
**que** chacune des résistances désactivables (25 à 28) au nombre d'une minimum est à détruire par l'application d'une surintensité électrique.

9. Système de direction selon l'une des revendications 5 à 8,
**caractérisé en ce**
**qu'**en tant que résistance, un réseau de résistances est prévu.

10. Système selon revendication 5,
**caractérisé en ce**
**que** l'ouverture d'accès est fermable, en particulier par un couvercle.
